# EUROPÄISCHE PATENTSCHRIFT

(11) **EP 0 667 479 B1**
(45) Veröffentlichungstag und Bekanntmachung des Hinweises auf die Patenterteilung: **08.04.1998**
(21) Anmeldenummer: 95100749.1
(22) Anmeldetag: 20.01.1995
(51) Int. Cl.: F16L 27/087

(54) **Druckmittelzuführung**
Device for supplying fluid under pressure
Dispositif d'alimentation d'un fluide sous pression

(30) Priorität: 12.02.1994 DE 4404547
(43) Veröffentlichungstag der Anmeldung: 16.08.1995
(73) Patentinhaber: Hiestand, Thomas, D-88630 Pfullendorf (DE)
(72) Erfinder: Hiestand, Thomas, D-88630 Pfullendorf (DE)
(74) Vertreter: Engelhardt, Guido, Dipl.-Ing.

(56) Entgegenhaltungen:
- DE-A- 4 124 153
- GB-A- 357 335
- US-A- 4 108 294

## Beschreibung

Die Erfindung bezieht sich auf eine Einrichtung zur Übertragung eines Mediums aus einem ersten Bauteil in ein rotierend antreibbares z. B. einer Servoeinrichtung zugeordnetes zweites Bauteil, wobei zwischen den beiden Bauteilen eine Ringkammer, an die eine Zuführungsleitung sowie eine zu einem Verbraucher führende Leitung für das zu übertragende Medium angeschlossen sind, und neben der Ringkammer ein erster und ein zweiter radial gerichteter Dichtspalt vorgesehen sind und die Ringkammer in axialer Richtung auf der einen Seite von dem ersten Bauteil und auf der anderen Seite von dem zweiten Bauteil eingeschlossen ist.

Durch die DE-A-41 24 153 ist eine Druckmittelzuführung dieser Art, die sich in der Praxis bewährt hat, bekannt. Es hat sich jedoch gezeigt, daß bei einem schlagartigen Druckaufbau in der Ringkammer, wie dies bei Umschaltvorgängen der Fall ist, das erste Bauteil kurzzeitig gegen das zweite Bauteil gepreßt wird und an diesem anliegt. Dadurch können an beiden Bauteilen im Bereich der Dichtspalte durch die dabei unumgängliche Gleitreibung, insbesondere bei hohen Drehzahldifferenzen, Beschädigungen hervorgerufen werden, so daß die Wirkung der Dichtspalte bereits nach kurzer Betriebsdauer beeinträchtigt sein kann. Durch zusätzliche, den Dichtspalten nachgeschaltete Regelkammern ist dies zwar weitgehend vermeidbar, der dazu erforderliche Bauaufwand ist aber erheblich. Auch ist der Einsatzbereich dieser Druckmittelübertragung begrenzt.

Aufgabe der Erfindung ist es daher, eine Einrichtung zur Übertragung eines Mediums von einem Bauteil in ein anderes Bauteil zu schaffen, bei der in der Ringkammer schlagartig auch ein hoher Druck aufgebaut werden kann, ohne daß die beiden Bauteile dadurch aneinander gepreßt werden. Das erste Bauteil soll vielmehr bei einer durch einen Umschaltvorgang hervorgerufenen Axialverschiebung nur mit sehr geringer Kraft an dem zweiten Bauteil kurzzeitig angelegt werden, so daß durch Reibungskräfte bedingte Beschädigungen im Bereich der Dichtspalte nahezu ausgeschlossen sind. Auch soll das erste Bauteil während einer Übertragung durch das Medium in einem Schwebezustand gehalten und somit durch dieses seitlich abgestützt werden, ein langer und störungsfreier Betrieb soll demnach trotz eines geringen Bauaufwandes gewährleistet sein.

Gemäß der Erfindung wird dies bei einer Einrichtung zur Übertragung eines Mediums der vorgenannten Gattung dadurch erreicht, daß das erste Bauteil gegenüber dem zweiten Bauteil axial begrenzt verstellbar abgestützt ist, daß die Ringkammer zur Rotationsachse des zweiten Bauteils geneigt oder im Querschnitt keilförmig ausgebildet ist, derart, daß die die Ringkammer begrenzende Umfangsfläche sowie die radial gerichtete Ringfläche des ersten Bauteils unter einem spitzen Winkel α zueinander angeordnet sind, und daß zur Rückstellung des ersten Bauteils zwischen diesem und dem zweiten Bauteil ein an einen der radial gerichteten Dichtspalte angeschlossener Druckraum vorgesehen ist, der über einen dritten radial gerichteten Dichtspalt entlastbar ist.

Zweckmäßig ist es hierbei, um einen Schwebezustand zu erreichen, den Neigungswinkel der Ringkammer oder der diese begrenzenden Umfangsfläche des ersten Bauteils derart zu wählen, daß die projezierte Fläche der Umfangsfläche des ersten Bauteils etwa der die Ringkammer begrenzenden radialen Ringfläche des ersten Bauteils entspricht.

Vorteilhaft ist es des weiteren, den ersten und den dritten radial gerichteten Dichtspalt unmittelbar oder über Kanäle jeweils an eine Auffangkammer oder an die Atmosphäre anzuschließen, wobei die Auffangkammern in dem ersten Bauteil vorgesehen sein sollten.

Ferner sollte die von dem vorzugsweise über den zweiten radial gerichteten Dichtspalt beaufschlagbare an dem ersten Bauteil angearbeitete wirksame Druckfläche der Druckkammer größer bemessen sein als die Summe der die Ringkammer und den zweiten radialen Dichtspalt begrenzenden Ringflächen des ersten Bauteils.

Angebracht ist es auch, daß die die Ringkammer begrenzende geneigt ausgebildete Umfangfläche des ersten Bauteils sich unmittelbar an die dem ersten radialen Dichtspalt zugeordnete eine Stirnfläche des ersten Bauteils divergierend anschließt oder daß bei einem zweiteiligen ersten Bauteil dessen die Ringkammer begrenzende geneigt ausgebildete Umfangsfläche sich unmittelbar an eine dem zweiten radial gerichteten Dichtspalt zugeordnete radial gerichtete Ringfläche des ersten Bauteils divergierend anschließt.

Das erste Bauteil kann unmittelbar an dem zweiten Bauteil axial begrenzt abgestützt sein, in dem das erste Bauteil in einer umlaufenden Ringnut des zweiten vorzugsweise aus zwei miteinander verbundenen Ringen zusammengesetzten Bauteils angeordnet ist. Nach einer andersartigen Ausgestaltung ist es aber auch möglich, daß das erste vorzugsweise aus zwei miteinander verbundenen Ringen zusammengesetzte Bauteil das zweite Bauteil übergreift.

Wird eine Einrichtung zur Übertragung eines Mediums gemäß der Erfindung ausgebildet, so ist stets gewährleistet, daß das erste Bauteil seitlich nicht an dem zweiten Bauteil reibt, und zwar auch nicht kurzzeitig bei einer Umschaltung. Durch die Gestaltung der Querschnittsfläche der Ringnut wird nämlich erreicht, daß die auf das erste axial begrenzt verstellbare Bauteil durch das zugeführte Medium ausgeübten seitlich gerichteten Kräfte nahezu ausgeglichen sind, so daß dieses durch diese Kräfte nicht gegen das zweite Bauteil gepreßt und die die Dichtspalte begrenzenden Flächen durch Reibungskräfte nicht beschädigt werden können. Durch das aus den beiden der Ringkammer zugeordneten Dichtspalte abströmende Medium wird das erste Bauteil vielmehr während einer Mediumübertragung in einem Schwebezustand gehalten, die Reibung zwischen den beiden Bauteilen wird dadurch minimiert.

Da die die Ringkammer begrenzende Ringfläche des ersten Bauteils, um einen Zusammenbau der beiden Bauteile zu ermöglichen, geringfügig größer bemessen ist als die projizierte Fläche der die Ringkammer des weiteren begrenzende Umfangsfläche des ersten Bauteils, ist dieses stets mit einer geringen in Richtung des zweiten Dichtspaltes wirkenden Kraft beaufschlagt. Dies hat zur Folge, daß der erste und zweite Dichtspalt bei einer Mediumübertragung langsam geöffnet werden. Da in diesem Fall der dritte Dichtspalt geschlossen und in dem zwischen den beiden Bauteilen vorgesehenen Druckraum ein Druck aufgebaut wird, wird das erste Bauteil nach kurzer Zeit selbsttätig zurückgeführt, der Druck in dem Druckraum wird dadurch wiederum, da der dritte Dichtspalt geöffnet wird, abgebaut. Das erste Bauteil wird somit zwischen zwei Stirnflächen des ersten Bauteils axial verstellt, ohne an diesem unter Druck anzuliegen und an diesem zu reiben. Trotz des geringen Bauaufwandes, um dies zu bewerkstelligen, ist demnach eine störungsfreie Übertragung eines Mediums bei einer langen Lebensdauer der Einrichtung gegeben.

In der Zeichnung sind zwei Ausführungsbeispiele einer gemäß der Erfindung ausgebildeten Einrichtung zur Übertragung eines Mediums aus einem ersten Bauteil in ein zweites Bauteil, die nachfolgend im einzelnen erläutert sind, dargestellt. Hierbei zeigen, jeweils in einem Axialschnitt:
- Figur 1: die Einrichtung vor Beginn einer Mediumübertragung,
- Figur 2: die Einrichtung nach Figur 1 während einer Mediumübertragung,
- Figur 3: die Einrichtung nach Figur 2, mit einer Ausführungsvariante der zwischen den beiden Bauteilen vorgesehenen Ringkammer und
- Figur 4: eine andersartige Ausgestaltung einer Einrichtung zur Übertragung eines Mediums vor einer Mediumübertragung.

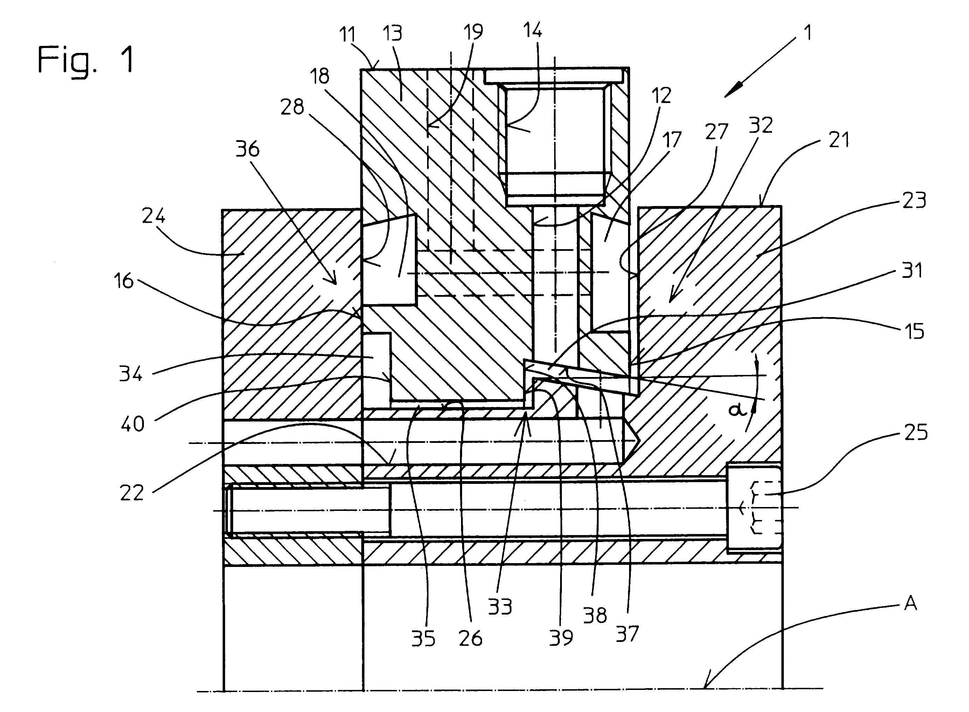

Die in den Figuren 1 bis 3 dargestellte und jeweils mit 1 bezeichnete Einrichtung dient zur Übertragung eines Mediums aus einem ersten stationären Bauteil 11 in ein rotierend antreibbares zweites Bauteil 21, das einer nicht gezeigten Servoeinrichtung als Verbraucher zugeordnet ist, um diese mit dem Medium versorgen zu können. Zwischen den beiden Bauteilen 11 und 21 ist hierbei eine Ringkammer 31 vorgesehen, an die eine Zuführungsleitung 12 sowie eine zu der Servoeinrichtung führende Leitung 22 angeschlossen sind. Neben der Ringkammer 31 ist ein erster radial gerichteter Dichtspalt 32 sowie ein zweiter radial gerichteter Dichtspalt 33 angeordnet, die durch die beiden Bauteile 11 und 12 begrenzt werden. Die Ringkammer 31 ist demnach in axialer Richtung rechts von dem zweiten Bauteil 21 und links von dem ersten Bauteil 11 eingeschlossen.

Das erste Bauteil 11 besteht bei dieser Ausgestaltung aus einem Ring 13, an dem ein Anschluß 14 für einen Hochdruckschlauch zur Zuführung des zu übertragenden Mediums eingearbeitet ist. Außerdem sind in den Ring 13, und zwar in dessen seitliche Stirnflächen 15 bzw. 16 Sammelkammern 17 und 18 eingearbeitet, die mit einer Rücklaufleitung 19 verbunden sind. Das zweite Bauteil 21 ist dagegen aus zwei Ringen 23 und 24 zusammengesetzt, die mittels Schrauben 25 fest miteinander verspannt sind, so daß eine Ringnut 26 gebildet ist. Und in die Ringnut 26 ist der das erste Bauteil 11 bildende Ring 13 eingesetzt, so daß diese somit an den Stirnflächen 27 und 28 des zweiten Bauteils 21 abgestützt und gegenüber diesem axial begrenzt verschiebbar angeordnet ist.

Die Ringkammer 31 ist unter einem Winkel α zur Rotationsachse A des zweiten Bauteils 21 geneigt angeordnet, die die Ringkammer 31 begrenzende Umfangsfläche 37 sowie die sich an diese anschließende Ringfläche 38 des ersten Bauteils 11 verlaufen somit unter einem spitzen Winkel (90°-α) zueinander. Der Winkel α ist dabei derart gewählt, daß die projizierte Fläche der Umfangsfläche 37 in ihrer Größe etwa der Ringfläche 38 entspricht, so daß bei einer Beaufschlagung dieser Flächen durch das zu übertragende Medium die dadurch erzeugten entgegengesetzt zueinander gerichteten Kräfte sich das Gleichgewicht halten.

Zwischen dem ersten Bauteil 11 und dem zweiten Bauteil 21 ist auf der dem ersten radial gerichteten Dichtspalt 32 gegenüberliegenden Seite ein dritter radial gerichteter Dichtspalt 36 vorgesehen. Der dritte Dichtspalt 36 begrenzt einen Druckraum 34, der über einen Ringspalt 35 mit dem zweiten Dichtspalt 33 verbunden ist. Die von dem Medium beaufschlagte an dem ersten Bauteil 11 vorgesehene Druckfläche 4D ist hierbei größer bemessen als die Summe der die Ringkammer 31 und den zweiten Dichtspalt 33 begrenzenden achssenkrechten Ringflächen 38 und 39 des ersten Bauteils 11.

Wird der Ringkammer 31 der Einrichtung 1 bei einer angenommenen in Figur 1 dargestellten Ausgangslage über die Leitung 12 ein Medium, beispielsweise eine Hydraulikflüssigkeit, zugeführt, so strömt dieses somit aus dem stationären ersten Bauteil 11 über die Leitung 22 einem nicht dargestellten zusammen mit dem zweiten Bauteil 21 rotierend angetriebenen Verbraucher zu. Da das erste Bauteil 11 mit seiner Stirnfläche 16 an der Stirnfläche 28 des zweiten Bauteils 21 anliegt, ohne daß dabei allerdings eine große axial gerichtete Kraft ausgeübt wird, ist der dritte Dichtspalt 36 nahezu geschlossen, der erste und der zweite Dichtspalt 32 und 33 sind dagegen geöffnet. Demnach strömt Medium über den ersten Dichtspalt 32 in die Auffangkammer 17 und über den zweiten Dichtspalt 33 in den Druckraum 34 ab.

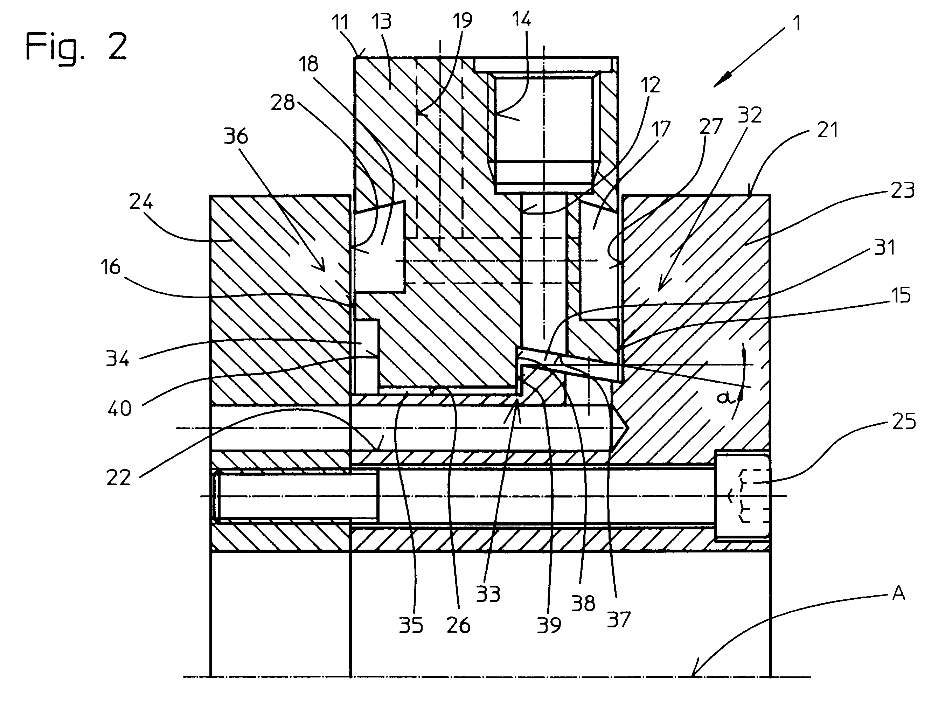

Bereits nach kurzer Zeit wird jedoch in dem Druckraum 34 ein Druck aufgebaut, durch den, da die Druckfläche 40 größer bemessen ist als die Summe der beiden gegenüberliegend angeordneten Ringflächen 38 und 39, das erste Bauteil 11 in die in Figur 2 dargestellte Lage verstellt wird. Während einer Druckmittelübertragung verharrt das erste Bauteil 11 in dieser Lage, es schwimmt gewissermaßen in der Ringnut 26 des zweiten Bauteils 21, da es bei geöffnetem dritten Dichtspalt 36 durch die auf die Ringflächen 38 und 39 ausgeübte Kraft, vermindert um die auf die Umfangsfläche 37 einwirkende Gegenkraft, nach links und bei geöffnetem ersten und zweiten Dichtspalt 32 bzw. 33 durch die auf die Druckfläche 40 ausgeübte Kraft nach rechts zurückgestellt wird.

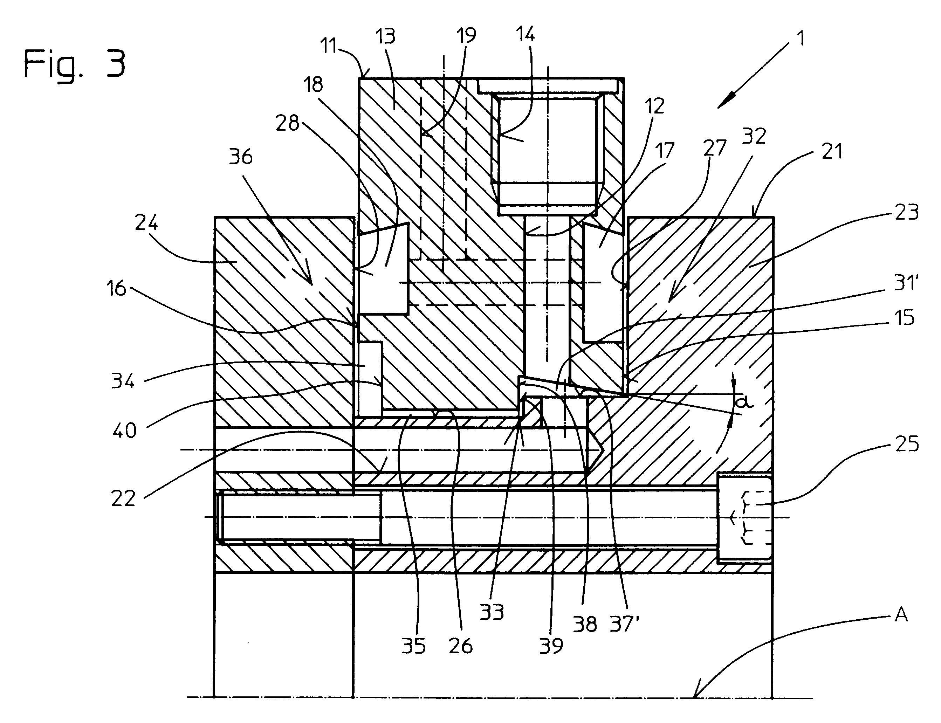

In Figur 3 ist gezeigt, daß die zwischen dem ersten Bauteil 11 und dem zweiten Bauteil 21 vorgesehene Ringkammer 31' im Querschnitt auch keilförmig ausgebildet sein kann. Die die Ringkammer 31' begrenzende Umfangsfläche 37' des zweiten Bauteils 21 ist hierbei als zylindrische Außenmantelfläche gestaltet.

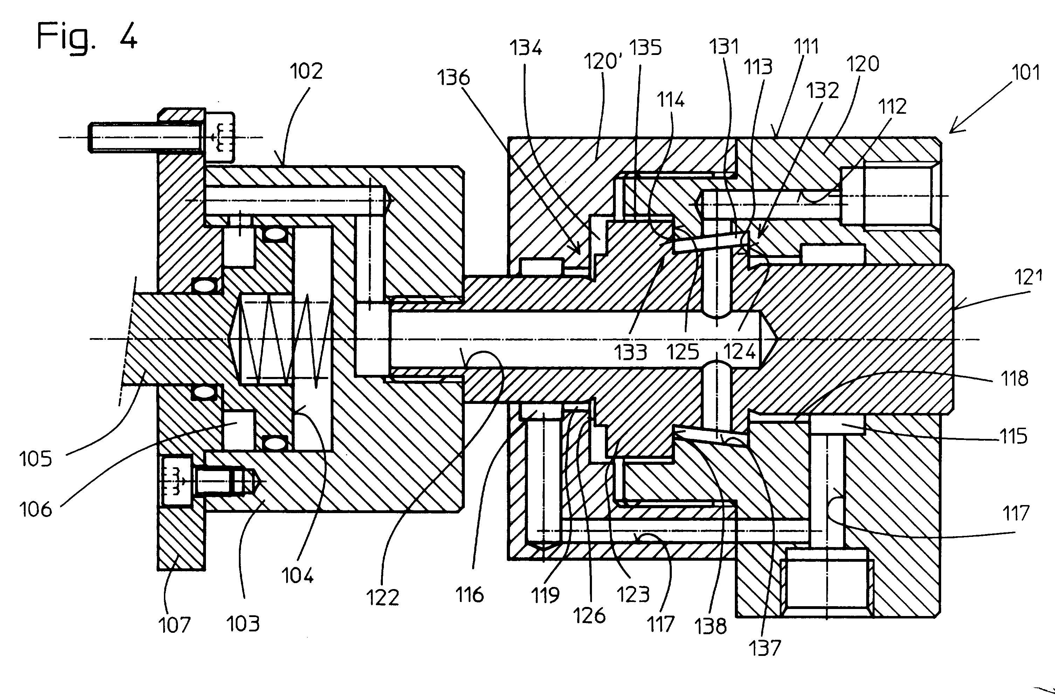

Bei dem Ausführungsbeispiel nach Figur 4 ist der Einrichtung 101 einer Servoeinrichtung 102 zugeordnet, die aus einem mittels eines Flansches 107 an einer Arbeitsmaschine befestigten umlaufenden Zylinder 103 und einen in diesen eingesetzten von Druckmittel beaufschlagbaren Kolben 104 besteht. Die Kolbenstange 105 des Kolbens 104 ist hierbei mit einem zu betätigenden Stellglied verbunden, so daß bei einer Druckmittelzuführung aus einem ersten Bauteil 111 über ein zweites an dem Zylinder 102 angebrachtes zweites Bauteil 121 in einen Druckraum 106 der Einrichtung 101 das Stellglied betätigt werden kann.

Das erste Bauteil 111 ist bei dieser Ausgestaltung aus zwei miteinander verschraubten Ringen 120 und 120' zusammengesetzt, von denen das als abgesetzte Welle 123 gestaltete zweite Bauteil 121 übergriffen ist. Zwischen den beiden Bauteilen 111 und 121 ist wiederum eine geneigt zur Achsrichtung des zweiten Bauteils 121 angeordnete Ringkammer 131 vorgesehen, an die eine Zuleitung 112 sowie eine zu der Servoeinrichtung 102 führende Leitung 122 angeschlossen sind.

Der Ringkammer 131 sind ebenfalls ein erster radial gerichteter Dichtspalt 132 sowie ein zweiter radial gerichteter Dichtspalt 133 zugeordnet, die von Stirnflächen 113 bzw. 114 des ersten Bauteils 111 sowie Stirnflächen 124 bzw. 125 des zweiten Bauteils 121 eingeschlossen sind. Des weiteren ist zwischen dem ersten Bauteil 111 und dem zweiten Bauteil 121 ein Druckraum 134 vorgesehen, der über einen Ringspalt 135 an den zweiten Dichtspalt 133 angeschlossen ist. Und über einen dritten radial gerichteten Dichtspalt 136 ist der Druckraum 134 entlastbar.

Das über die Dichtspalte 132 bzw. 133 und 136 abströmende Druckmittel wird in Sammelkammern 115 bzw. 116 aufgenommen, die an eine Rücklaufleitung 117 angeschlossen sind. Die Verbindung zwischen den Dichtspalten 132 und 136 und den Sammelkammern 115 bzw. 116 wird durch Kanäle 118 bzw. 119 bewerkstelligt, die in die Ringe 120 bzw. 120' des ersten Bauteils 111 eingearbeitet sind.

Bei einer Druckmittelzuführung wird das axial begrenzt zwischen den Stirnflächen 124 und 126 des zweiten Bauteils 121 verstellbare erste Bauteil 111 in gleicher Weise wie bei dem Ausführungsbeispiel nach Figur 1 aufgrund der geneigt angeordneten Ringkammer 131 in einem Schwebezustand gehalten, da sich die auf die geneigt verlaufende Umfangsfläche 137 sowie die unter einem spitzen Winkel an diese anschließende achssenkrechte Ringfläche 138 des ersten Bauteils 111 einwirkenden Kräfte etwa das Gleichgewicht halten und durch den sich in dem Druckraum 134 gegebenenfalls aufbauenden Druck das erste Bauteil 111 jeweils selbsttätig zurückgeführt wird.

## Patentansprüche

1. Einrichtung (1; 101) zur Übertragung eines Mediums aus einem ersten Bauteil (11; 111) in ein rotierend antreibbares, z. B. einer Servoeinrichtung (102) zugeordnetes zweites Bauteil (21; 121), wobei zwischen den beiden Bauteilen (11, 21; 111, 121) eine Ringkammer (31, 31'; 131), an die eine Zuführungsleitung (12; 112) sowie eine zu einem Verbraucher (Servoeinrichtung 102) führende Leitung (22; 122) für das zu übertragende Medium angeschlossen sind, und neben der Ringkammer (31, 31'; 131) ein erster und ein zweiter radial gerichteter Dichtspalt (32, 33; 132, 133) vorgesehen sind und die Ringkammer (31, 31'; 131) in axialer Richtung auf der einen Seite von dem ersten Bauteil (11; 111) und auf der anderen Seite von dem zweiten Bauteil (21; 121) eingeschlossen ist,
**dadurch gekennzeichnet,**
daß das erste Bauteil (11; 111) gegenüber dem zweiten Bauteil (21; 121) axial begrenzt verstellbar abgestützt ist, daß die Ringkammer (31, 31'; 131) zur Rotationsachse (A) des zweiten Bauteils (21; 121) geneigt oder im Querschnitt keilförmig ausgebildet ist, derart, daß die die Ringkammer (31, 31'; 131) begrenzende Umfangsfläche (37; 137) sowie die radial gerichtete Ringfläche (38; 138) des ersten Bauteils (11; 111) unter einem spitzen Winkel (90°-α) zueinander angeordnet sind und daß zur Rückstellung des ersten Bauteils (11; 111) zwischen diesem und dem zweiten Bauteil (21; 121) ein an einen der radial gerichteten Dichtspalte (33; 133) angeschlossener Druckraum (34; 134) vorgesehen ist, der über einen dritten radial gerichteten Dichtspalt (36; 136) entlastbar ist.

2. Einrichtung nach Anspruch 1,
**dadurch gekennzeichnet,**
daß der Neigungswinkel (α) der Ringkammer (31, 31'; 131) oder der diese begrenzenden Umfangsfläche (37; 137) des ersten Bauteils (11; 111) derart gewählt ist, daß die projezierte Fläche der Umfangsfläche (37; 137) des ersten Bauteils (11; 111) etwa der die Ringkammer (31, 31'; 131) begrenzenden radialen Ringfläche (38; 138) des ersten Bauteils (11; 111) entspricht.

3. Einrichtung nach Anspruch 1 oder 2,
**dadurch gekennzeichnet,**
daß der erste und der dritte radial gerichtete Dichtspalt (32; 36; 132; 136) unmittelbar oder über Kanäle (118, 119) jeweils an eine Auffangkammer (15, 16; 115, 116) oder an die Atmosphäre angeschlossen sind.

4. Einrichtung nach Anspruch 3,
**dadurch gekennzeichnet,**
daß die Auffangkammer (15, 16; 115, 116) in dem ersten Bauteil (11; 111) vorgesehen sind.

5. Einrichtung nach einem oder mehreren der Ansprüche 1 bis 4,
**dadurch gekennzeichnet,**
daß die von dem über den zweiten radial gerichteten Dichtspalt (33) beaufschlagbare wirksame an dem ersten Bauteil (11) angearbeitete Druckfläche (40) der Druckkammer (34) größer bemessen ist als die Summe der die Ringkammer (31) und den zweiten radialen Dichtspalt (33) begrenzenden Ringflächen (38, 39) des ersten Bauteils (11).

6. Einrichtung nach einem oder mehreren der Ansprüche 1 bis 5,
**dadurch gekennzeichnet,**
daß die die Ringkammer (31) begrenzende geneigt ausgebildete Umfangfläche (37) des ersten Bauteils (11) sich unmittelbar an die dem ersten radialen Dichtspalt (32) zugeordnete eine Stirnfläche (15) des ersten Bauteils (11) divergierend anschließt.

7. Einrichtung nach einem oder mehreren der Ansprüche 1 bis 5,
**dadurch gekennzeichnet,**
daß bei einem zweiteiligen ersten Bauteil (111) dessen die Ringkammer (131) begrenzende geneigt ausgebildete Umfangsfläche (137) sich unmittelbar an eine dem zweiten radial gerichteten Dichtspalt (133) zugeordnete radial gerichtete Ringfläche (Stirnfläche 114) des ersten Bauteils (111) divergierend anschließt.

8. Einrichtung nach einem oder mehreren der Ansprüche 1 bis 7,
**dadurch gekennzeichnet,**
daß das erste Bauteil (11, 111) unmittelbar an dem zweiten Bauteil (21; 121) axial begrenzt abgestützt ist.

9. Einrichtung nach Anspruch 8,
**dadurch gekennzeichnet,**
daß das erste Bauteil (11) in einer umlaufenden Ringnut (26) des zweiten vorzugsweise aus zwei miteinander verbundenen Ringen (23, 24) zusammengesetzten Bauteils (21) angeordnet ist.

10. Einrichtung nach Anspruch 8,
**dadurch gekennzeichnet,**
daß das erste vorzugsweise aus zwei miteinander verbundenen Ringen (120, 121') zusammengesetzte Bauteil (111) das zweite Bauteil (121) übergreift.

## Claims

1. A device (1; 101) for transmitting a medium from a first component (11; 111) into a second component (21; 121), e.g. a servo device (102) which is arranged in such a way that it can be driven so as to rotate, with an annular chamber (31, 31'; 131) located between the two components (11, 21; 111, 121) and, connected to the annular chamber (31, 31'; 131), a supply line (12; 112) and a line (22; 122) leading to a consumer (servo device 102) for carrying the medium to be transmitted, with a first and a second radially arranged sealing gap (32, 33; 132, 133) provided adjacent to the annular chamber (31, 31'; 131) which is enclosed in the axial direction by the first component (11; 111) on the one side and the second component (21; 121) on the other side,
**characterised in that,**
the first component (11; 111) is supported so as to permit it to be moved to a limited extent in the axial direction in relation to the second component (21; 121), that the annular chamber (31, 31'; 131) is arranged at an inclined angle in relation to the axis of rotation (A) of the second component (21; 121) or has a wedge-shaped cross-section such that the circumferential surface (37; 137) delimiting the annular chamber (31, 31'; 131) and the radially arranged annular surface (38, 138) of the first component (11; 111) are arranged at an acute angle (90° - α) in relation to one another, and that a pressure chamber (34; 134) connected to one of the radially aligned sealing gaps (33; 133) is provided between the first component (11; 111) and the second component (21; 121) for resetting the first component (11; 111), with it being possible to depressurise the pressure chamber (34; 134) via a third radially arranged sealing gap (36; 136).

2. The device in accordance with Claim 1,
**characterised in that,**
the angle of inclination (α) of the annular chamber (31, 31'; 131) or that of the circumferential surface (37; 137) of the first component (11; 111) which delimits the annular chamber (31, 31', 131) is selected in such a way that the projected surface of the circumferential surface (37; 137) of the first component (11; 111) approximately corresponds to the radial annular surface (38; 138) of the first component (11; 111) which delimits the annular chamber (31, 31'; 131).

3. The device in accordance with Claim 1 or 2,
**characterised in that,**
the first and the third radially aligned sealing gaps (32; 36; 132; 136) are each connected to a collecting chamber (15, 16; 115, 116) or to the atmosphere either directly or by means of ducts (118, 119).

4. The device in accordance with Claim 3,
**characterised in that,**
the collecting chamber (15, 16; 115, 116) is provided in the first component (11; 111).

5. The device in accordance with one or more of Claims 1 to 4,
**characterised in that,**
the area of the pressure surface (40) machined onto the pressure chamber (34) which is effective and is acted upon by pressurised medium via the second radially aligned sealing gap (33) is larger than the total area of the annular surfaces (38, 39) of the first component (11) which delimit the annular chamber (31) and the second radial sealing gap (33).

6. The device in accordance with one or more of Claims 1 to 5,
**characterised in that,**
the circumferential surface (37) of the first component (11) which is arranged at an inclined angle and delimits the annular chamber (31) is directly and divergently connected to the one end surface (15) of the first component (11) which faces the first radial sealing gap (32).

7. The device in accordance with one or more of Claims 1 to 5,
**characterised in that,**
when the first component (111) is made up of two parts, its circumferential surface (137) which is arranged at an inclined angle and delimits the annular chamber (131) is directly and divergently connected to a radially aligned annular surface (end surface 114) of the first component (111) which faces the second radially aligned sealing gap (132).

8. The device in accordance with one or more of Claims 1 to 7,
**characterised in that,**
the first component (11,111) is directly supported against the second component (21; 121) in such a way as to enable it to move axially in a restricted fashion.

9. The device in accordance with Claim 8,
**characterised in that,**
the first component (11) is arranged in a circumferential annular groove (26) of the second component (21) which, in a preferred embodiment, is assembled from two rings (23, 24) connected together.

10. The device in accordance with Claim 8,
**characterised in that,**
the first component (111) which, in a preferred embodiment, is assembled from two rings (120, 121') connected together, overlaps the second component (121).

## Revendications

1. Dispositif (1; 101) pour la transmission d'un milieu à partir d'un premier composant (11; 111), vers un deuxième composant (21; 121) entraîné en rotation et assigné p. ex. un équipement servo (102), avec, entre les deux composants (11, 21; 111, 121) une chambre annulaire (31, 31'; 131), à laquelle sont branchées une conduite d'alimentation (12; 112) ainsi qu'une conduite (22; 122) servant à amener le milieu vers un consommateur (équipement servo 102) ainsi que, à côté de la chambre annulaire (31, 31'; 131), un premier et un deuxième interstice d'étoupage radial (32, 33; 132, 133), la chambre annulaire (31, 31'; 131) étant enfermée en direction axiale d'un côté par le premier composant (11; 111) et de l'autre côté par le deuxième composant (21; 121),
caractérisé en ce que
le premier composant (11; 111) s'appuie, axialement réglable dans certaines limites, par rapport au deuxième composant (21; 121), que la chambre annulaire (31, 31'; 131) est inclinée par rapport à l'axe de rotation (A) du deuxième composant (21; 121) ou possède une section sous forme d'un coin, de sorte que la surface de pourtour (37; 137) limitant la chambre annulaire (31, 31'; 131) ainsi que la surface annulaire radiale (38; 138) du premier composant (11; 111) soient disposées sous un angle aigu (90°-α) l'une par rapport à l'autre, et que, pour le rappel du premier composant (11; 111), il est prévu entre celle-ci et le deuxième composant (21; 121) une chambre de pression (34; 134) raccordée à un des interstices d'étoupage radiaux (33; 133), et déchargeable par l'intermédiaire d'un troisième interstice d'étoupage radial (36; 136)

2. Dispositif d'après la revendication 1,
caractérisé en ce que
l'angle d'inclinaison (α) de la chambre annulaire (31, 31'; 131) ou de la surface de pourtour (37; 137) du premier composant (11; 111) qui la limite, soit choisi de sorte que la surface projetée de la surface de pourtour (37; 137) du premier composant (11; 111) corresponde à peu près à la surface annulaire radiale (38; 138) du premier composant (11; 111) qui limite la chambre annulaire (31, 31'; 131).

3. Dispositif d'après les revendications 1 ou 2,
caractérisé en ce que
le premier et le troisième interstice d'étoupage (32; 36; 132; 136) communiquent soit directement soit par l'intermédiaire de canaux (118, 119) avec respectivement une chambre de récupération (15, 16; 115, 116) ou avec l'atmosphère.

4. Dispositif d'après la revendication 3,
caractérisé en ce que
la chambre de récupération (15, 16; 115, 116) est disposée dans le premier composant (11; 111).

5. Dispositif d'après une ou plusieurs des revendications 1 à 4,
caractérisé en ce que
la surface de pression active (40) de la chambre de pression (34), prévue sur le premier composant (11), actionnée par l'intermédiaire du deuxième interstice d'étoupage radial (33), est plus grande que la somme des surfaces annulaires (38, 39) limitant la chambre annulaire (31) et le deuxième interstice d'étoupage radial (33).

6. Dispositif d'après une ou plusieurs des revendications 1 à 5,
caractérisé en ce que
la surface de pourtour inclinée (37) du premier composant (11), limitant la chambre annulaire (31), soit prévue, de manière divergente, directement sur la face frontale (15) du premier composant (11) assignée au premier interstice d'étoupage (32).

7. Dispositif d'après une ou plusieurs des revendications 1 à 5,
caractérisé en ce que
dans le cas d'un premier composant divisé (111), sa surface de pourtour inclinée (137) limitant la chambre annulaire (131) soit prévue, de manière divergente, directement sur une face annulaire radiale (face frontale 114) du premier composant (11) assignée au deuxième interstice d'étoupage radial (111).

8. Dispositif d'après une ou plusieurs des revendications 1 à 7,
caractérisé en ce que
le premier composant (11; 111) s'appuie, axialement réglable dans certaines limites, directement sur le deuxième composant (21; 121).

9. Dispositif d'après la revendication 8,
caractérisé en ce que
le premier composant (11) est disposé dans une gorge annulaire circulaire (26) du deuxième composant (21) consistant de préférence de deux anneaux (23, 24) liés entre eux.

10. Dispositif d'après la revendication 8,
caractérisé en ce que
le premier composant (111) constitué de préférence de deux anneaux (120, 121') liés entre eux, s'étend au-delà du deuxième composant (121).
